# EUROPÄISCHE PATENTANMELDUNG

(11) **EP 1 429 064 A1**
(43) Veröffentlichungstag der Anmeldung: **16.06.2004**
(21) Anmeldenummer: 03025555.8
(22) Anmeldetag: 08.11.2003
(51) Int. Cl.: F16K 31/42

(54) **Servo-Magnetventil**

(30) Priorität: 13.12.2002 DE 20219358 U
(71) Anmelder: A. und K. Müller GmbH & Co. KG, 40595 Düsseldorf (DE)
(72) Erfinder: Berger, Gerd, 40593 Düsseldorf (DE)
(74) Vertreter: Feder, Wolf-D., Dr.

(57) **Zusammenfassung**

Ein eigenmediumbetätigtes Servo-Magnetventil für Flüssigkeiten, insbesondere für sanitäre Armaturen. Das Ventil besitzt ein Ventilgehäuse (1-4) mit einem Ventileingang (E) und einem Ventilausgang (A), die an zwei voneinander abgewandten Seiten angeordnet sind. Im Ventilgehäuse (1-4) ist ein den Ventilteller (6.1) tragender Differentialkolben (5) angeordnet, an dessen einer Seite ein mit dem Ventileingang verbundener Druckraum (8) angeordnet ist, der über den Ventilsitz (7) mit dem Ventilausgang verbunden ist. An dessen anderer Seite ist ein Steuerraum (9) angeordnet, der über eine durch ein Pilotventil (13) verschließbare Entlastungsbohrung mit dem Ventilausgang und über einen Steuerkanal (10) mit dem Druckraum (8) verbunden ist. Das Gehäuse (1-4) ist als schmaler Körper ausgebildet. Die Ein-/Ausströmrichtung verläuft parallel zur Gehäuselängsachse (L). Der Differentialkolben (5) ist derart angeordnet, dass seine Bewegung senkrecht zur Gehäuselängsachse (L) verläuft. Das Pilotventil (13) ist an der schmalen Außenseite des Gehäuses befestigt. Die Entlastungsbohrung befindet sich als verschließbarer Pilotventilsitz (13.6) zwischen der Ventilkammer (13.7) des Pilotventils (13) und einem mit dem Ventilausgang verbundenen Abflusskanal (14). Die Ventilkammer (13.7) ist über einen Entlastungskanal (12) mit dem Steuerraum (9) verbunden.

## Beschreibung

Die Erfindung betrifft ein eigenmediumbetätigtes Servo-Magnetventil für Flüssigkeiten, insbesondere für sanitäre Armaturen mit den Merkmalen aus dem Oberbegriff des Patentanspruchs 1.

Ventile mit diesen Merkmalen sind an sich bekannt, beispielsweise wie in EP 0 936 317 A1 und DE 298 19 769.3 U beschrieben.

Bei den bekannten Ventilen dieser Bauart ist das als Elektromagnetventil ausgebildete Pilotventil in das Ventilgehäuse integriert und der Differentialkolben ist derart im Gehäuse angeordnet, dass seine Bewegung parallel zur Ein-/Aus-strömrichtung des Mediums verläuft.

Dies hat zur Folge, dass einerseits das Pilotventil nicht ohne weiteres auswechselbar ist und andererseits das Gesamtventil in der Dimension quer zur Ein-/ Ausströmrichtung relativ breit ausgebildet sein muss. Da diese Ventile oft als Kartuschenventile ausgebildet sind mit einem Gewindeabschnitt an einem Ende des Ventilgehäuses zum Einschrauben in eine Ventilaufnahme, muss auch diese Ventilaufnahme relativ breit ausgeführt sein. Dies führt insbesondere bei sanitären Armaturen, wo die Platzverhältnisse oft eng sind, zu Montageschwierigkeiten.

Der Erfindung liegt die Aufgabe zugrunde, ein eigenmediumbetätigtes Servo-Magnetventil der im Oberbegriff des Patentanspruchs 1 angegebenen Bauart so auszugestalten, dass das Ventil insgesamt schmal ausgeführt werden kann und dadurch in der Breite wenig Platz beansprucht und das Pilotventil leicht ausund einbaubar ist.

Die Lösung dieser Aufgabe erfolgt erfindungsgemäß mit den Merkmalen aus dem kennzeichnenden Teil des Patentanspruchs 1. Vorteilhafte Weiterbildungen des erfindungsgemäßen Ventils sind in den abhängigen Ansprüchen beschrieben.

Ein Grundgedanke der Erfindung besteht darin, den Differentialkolben mit dem an ihm angeordneten Ventilteller derart im Gehäuse anzuordnen, dass seine Bewegung nicht parallel, sondern senkrecht zur Durchflussrichtung verläuft. Ein weiterer Grundgedanke der Erfindung besteht darin, das Pilotventil so anzuordnen, dass die Bewegung des mit dem Plunger verbundenen Verschlussorgans nicht wie bei bekannten Ventilen parallel zur Bewegungsrichtung des Differentialkolbens verläuft, sondern senkrecht zu dieser Bewegungsrichtung. Hierzu ist das Pilotventil an der Außenseite des Gehäuses demontierbar befestigt, an welcher sich der Ventilausgang befindet. Da das Gehäuse als schmaler, länglicher Körper ausgebildet ist, dessen Länge größer ist als seine Breite und Ventileingang und Ventilausgang an den schmalen Außenseiten dieses Gehäuses angeordnet sind, wobei die Ein-/Ausströmrichtung parallel zur Gehäuselängsachse verläuft, erhält man ein sehr schmal ausgebildetes Gesamtventil. Das Ventil kann so schmal dimensioniert sein, dass es sich direkt in eine Zuleitung zu einer sanitären Armatur integrieren lässt. Wie weiter unten anhand von Ausführungsbeispielen gezeigt, kann das Ventil am Ventileingang und/oder Ventilausgang mit Rohr- oder Schlauchanschlüssen versehen sein, es kann aber auch die den Ventileingang tragende schmale Außenseite des Gehäuses einen vom Ventileingang durchsetzten Gewindestutzen aufweisen zum Einschrauben des Ventils in eine Ventilaufnahme.

Im folgenden werden anhand der beigefügten Zeichnungen zwei Ausführungsbeispiele für ein Ventil nach der Erfindung näher erläutert.

In den Zeichnungen zeigen:
- Fig. 1: eine erste Ausführungsform eines eigenmediumbetätigten Servo-Magnetventils in einem Schnitt entlang der Längsrichtung des Gehäuses;
- Fig. 2: das Ventil nach Fig. 1 in gegenüber Fig. 1 leicht verkleinerter Darstellung und einer teilweise aufgerissenen Seitenansicht;
- Fig. 3: eine Seitenansicht des Ventils gemäß Fig. 2 aus einer um 90° verdrehten Richtung;
- Fig. 4: in verkleinerter Darstellung eine perspektivische Ansicht des Ventils nach Fig. 1 bis 3 mit angesetztem Rohrstück;
- Fig. 5: eine Explosionsdarstellung des Ventils nach Fig. 1 bis 4;
- Fig. 6: eine Variante der Ausführungsform des Ventils nach Fig. 1 bis 5 in einer Darstellung analog Fig. 1;
- Fig. 7: das Ventil nach Fig. 6 in verkleinerter Darstellung analog Fig. 4.

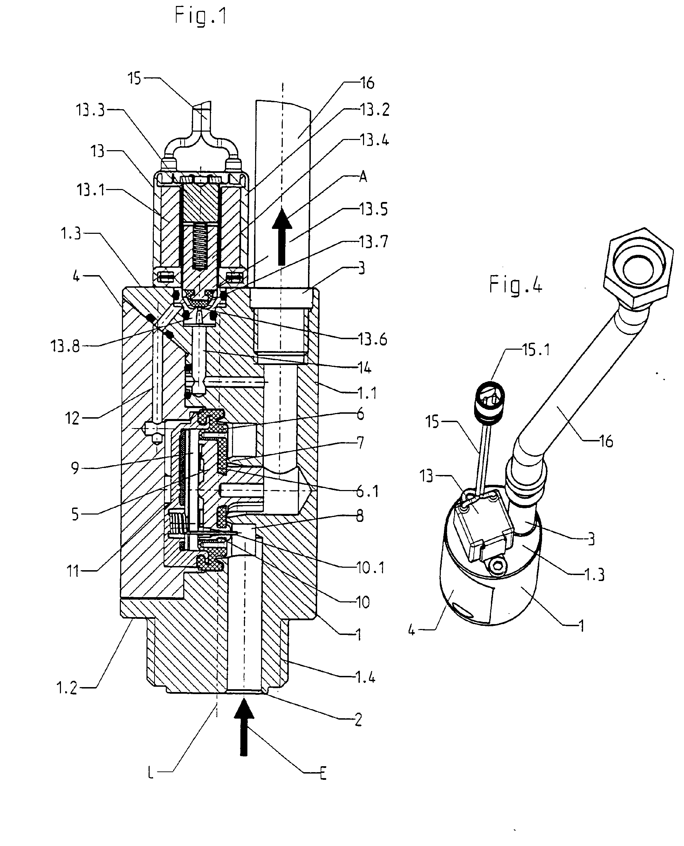

Das in den Fig. 1 bis 5 dargestellte eigenmediumbetätigte Servo-Magnetventil besitzt ein Ventilgehäuse, das zweiteilig aufgebaut ist mit einem Grundkörper 1, der an einer Seite eine den Innenraum des Gehäuses zugänglich machende Öffnung besitzt, die mit einem sich in Gehäuselängsrichtung L über einen Teil der Gehäuselänge erstreckenden Gehäusedeckel 4 verschlossen ist. Das Gesamtgehäuse ist als schmaler, länglicher, im wesentlichen zylindrischer Körper ausgebildet, an dessen Außenseite eine Mantelfläche 1.1 sowie zwei schmale Endflächen 1.2 und 1.3 angeordnet sind. Im Bereich der einen Endfläche 1.2 ist der Ventileingang 2 angeordnet, der einen an dieser Endfläche liegenden Gewindestutzen 1.4 durchsetzt, welcher zum Einschrauben des Ventils in eine Ventilaufnahme dient.

An der Endfläche 1.3 ist der Ventilausgang 3 außerhalb der Längsachse L angeordnet. Weiterhin ist an dieser Endfläche ein Pilotventil 13 befestigt, das weiter unten näher erläutert wird.

Im Innenraum des Ventilgehäuses ist ein Differentialkolben in einer Richtung senkrecht zur Ventillängsrichtung L verschiebbar angeordnet, an dessen einer Seite ein mit dem Ventileingang 2 verbundener Druckraum 8 angeordnet ist, der über den Ventilsitz 7 mit dem Ventilausgang 3 verbunden ist, während an der anderen Seite des Differentialkolbens 5 ein Steuerraum 9 angeordnet ist.

Der Druckraum 8 ist gegen den Steuerraum 9 im Randbereich des Differentialkolbens 5 durch eine Rollmembran 6 abgedichtet, in welche auch der Ventilteller 6.1 integriert ist. Der Steuerraum 9 ist über einen Steuerkanal, der als exzentrisch im Differentialkolben 5 angeordnete Steuerbohrung 10 ausgebildet ist, mit dem Druckraum 8 verbunden. Zur ständigen Reinigung dieser Steuerbohrung 10 dient eine Reinigungsfeder 10.1.

Weiterhin ist der Steuerraum 9 über eine mittels eines Verschlussorgans verschließbare Entlastungsbohrung mit dem Ventilausgang 3 verbunden. Die Entlastungsbohrung befindet sich als verschließbarer Pilotventilsitz 13.6 im Pilotventil 13 zwischen der Ventilkammer 13.7 des Pilotventils 13 und einem mit dem Ventilausgang 3 verbundenen Abflusskanal 14. Die Ventilkammer 13.7 ist über einen Entlastungskanal 12 mit dem Steuerraum 9 verbunden.

Das Pilotventil 13, das als Elektromagnetventil ausgebildet ist, besitzt in der üblichen Weise eine Magnetspule 13.1, ein Magnetjoch 13.2, ein mit dem Magnetjoch verbundenes Kopfstück 13.3 sowie einen beweglichen Plunger 13.4, an dessen aus der Spule herausgeführtem Ende der Pilotventilteller 13.5 angeordnet ist, der dem Pilotventilsitz 13.6 gegenüberliegt. Die Ventilkammer 13.7 des Pilotventils 13 befindet sich in einem Ansatzstück 13.8, mit dem das Pilotventil 13 in eine entsprechende Öffnung an der Endfläche 1.3 des Gehäusegrundkörpers 1 einsetzbar ist. Bei der dargestellten Ausführungsform ist an den Ventilausgang 3 ein Rohrstück 16 angeschlossen. Die Zuführung der elektrischen Signale zum Pilotventil 13 erfolgt über Verbindungsleitungen 15 mit einem Stecker 15.1.

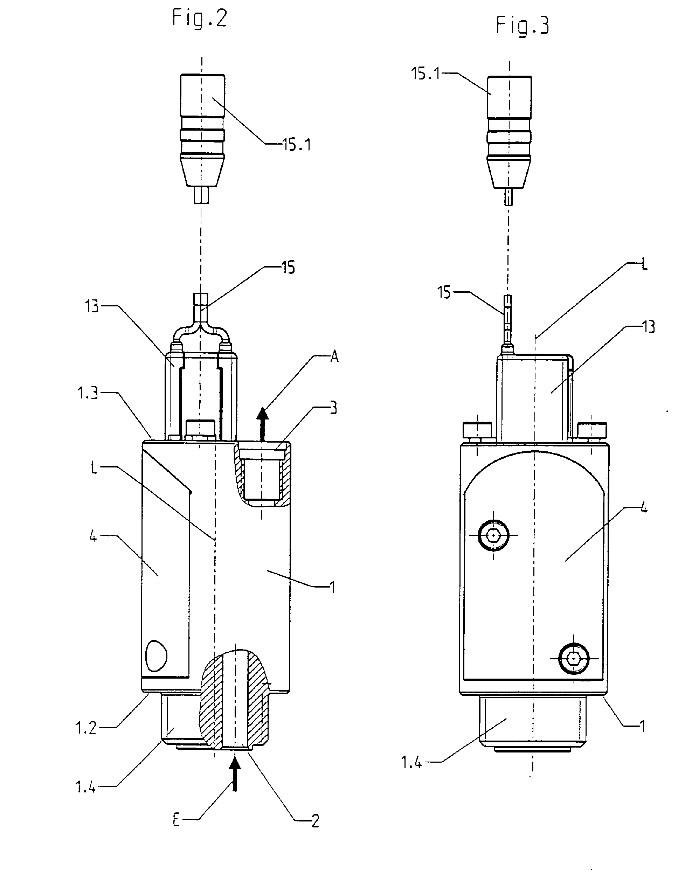

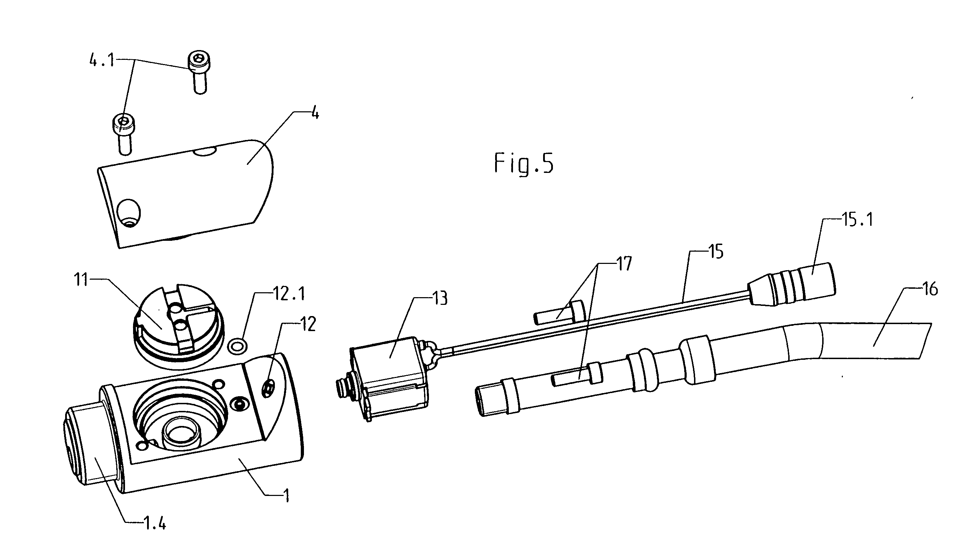

Das Rohrstück 16 ist in den Fig. 2 und 3 nicht dargestellt. Fig. 5 zeigt das Ventil nach Fig. 1 bis 4 in einer explodierten Darstellung. Der Differentialkolben 5 mit der Membran 6 und einer den Steuerraum 9 abschließenden Haube 11 sind als zusammenhängendes Einsatzteil ausgebildet, das durch die vom Deckel 4 verschlossene Öffnung in den Innenraum des Gehäusegrundkörpers 1 einsetzbar ist. Danach wird der Deckel 4 aufgesetzt und mit Schraubverbindungen 4.1 befestigt. Die Abdichtung des Entlastungskanals 12 an der Grenze zwischen Deckel 4 und Gehäusegrundkörper 1 erfolgt über eine Dichtung 12.1. Das Magnetventil 13 wird mittels Schraubverbindungen 17 auf dem Gehäusegrundkörper 1 befestigt.

Die Funktionsweise des in den Fig. 1 bis 5 dargestellten Ventils in an sich bekannter Weise folgende:

Im geschlossenen Zustand des Pilotventils 13 herrscht im Steuerraum 9, der über die Steuerbohrung 10 mit dem Ventileingang 2 verbunden ist, ein Druck der die Membran 6 mit dem Ventilteller 6.1 auf dem Ventilsitz 7 festhält. Wenn der Magnetspule 13.1 des Pilotventils ein elektrisches Signal zugeführt wird, wird der Plunger 13.4 angezogen und das Verschlussorgan 13.5 hebt vom Pilotventilsitz 13.6, der die Entlastungsbohrung für das Servo-Ventil darstellt, ab. Das Pilotventil 13 hat geöffnet. Nunmehr ist über den Entlastungskanal 12 und den Abflusskanal 14 der Steuerraum 9 mit dem Ventilausgang 3 verbunden, was zu einem Druckabfall im Steuerraum 9 führt. Dadurch hebt der auf die dem Druckraum 8 zugekehrte Seite der Membran 6 vom Ventileingang 2 her wirkende Wasserdruck den Ventilteller 6.1 vom Ventilsitz 7 ab. Damit fließt das Medium in Pfeilrichtung E vom Ventileingang 2 zum Ventilausgang 3 und von dort in Pfeilrichtung A über das Rohr 16 zu dem nicht dargestellten Armaturenauslauf. Wird das Pilotventil 13 wieder geschlossen, so baut sich im Steuerraum 9 wieder ein entsprechender Gegendruck auf und der Ventilteller 6.1 setzt wieder auf den Ventilsitz 7 auf.

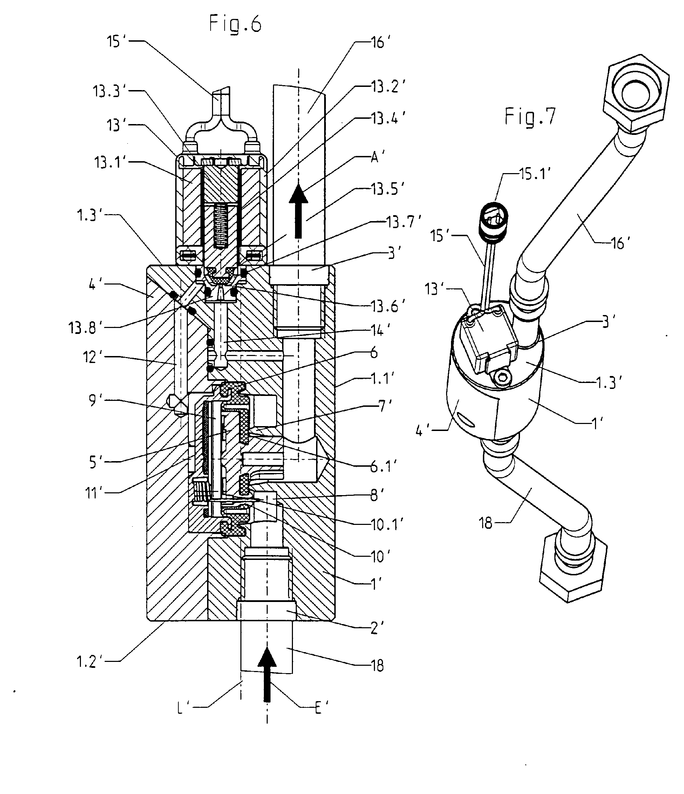

Die in den Fig. 6 und 7 dargestellte Ausführungsform eines eigenmediumbetätigten Servo-Magnetventils unterscheidet sich von der Ausführungsform nach den Fig. 1 bis 5 lediglich dadurch, dass das Ventilgehäuse an der Seite des Ventileingangs nicht in eine Ventilaufnahme einschraubbar ist, sondern über eine Rohrverbindung mit einem Zulauf verbunden ist. Da das Ventil nach Fig. 6 in den übrigen Merkmalen genau der Ausführungsform nach Fig. 1 entspricht, sind sich entsprechende Bauteile mit den gleichen Bezugsziffern versehen wie in Fig. 1 und durch einen Apostrophstrich gekennzeichnet. Diese sich genau entsprechenden Bauteile werden im folgenden nicht noch einmal beschrieben, und es wird hierzu auf die Erläuterungen zu den Fig. 1 bis 5 verwiesen.

Bei der Ausführungsform nach Fig. 6 ist der Grundkörper 1' an der Seite des Ventileingangs 2' nicht mit einem Gewindestutzen versehen, sondern er besitzt einen Rohranschluss, in den ein Zulaufrohr 18 eingeschraubt ist. Der den Innenraum des Gehäuses abschließende Gehäusedeckel 4' erstreckt sich bis zur unteren Endfläche 1.2' des Gehäuses.

Fig. 7 zeigt das Ventil nach Fig. 6 in Zusammenschaltung mit dem Zuflussrohr 18 und dem Abflussrohr 16'.

Die Funktionsweise des Ventils nach Fig. 6 und 7 ist die gleiche wie die Funktionsweise des Ventils nach Fig. 1 bis 5.

## Patentansprüche

1. Eigenmediumbetätigtes Servo-Magnetventil für Flüssigkeiten, insbesondere für sanitäre Armaturen mit einem Ventilgehäuse, das einen Ventileingang und einen Ventilausgang aufweist, die in der Ventilschließstellung durch einen auf einem Ventilsitz aufsitzenden Ventilteller abgedichtet voneinander getrennt sind, wobei Ventileingang und Ventilausgang an zwei voneinander abgewandten Seiten des Ventilgehäuses angeordnet sind und im Ventilgehäuse ein den Ventilteller tragender Differentialkolben verschiebbar angeordnet ist, an dessen einer Seite ein mit dem Ventileingang verbundener Druckraum angeordnet ist, der über den Ventilsitz mit dem Ventilausgang verbunden ist, während an dessen anderer Seite ein Steuerraum angeordnet ist, der über eine durch ein mit dem Plunger eines elektromagnetischen Pilotventils verbundenes Verschlussorgan verschließbare Entlastungsbohrung mit dem Ventilausgang und über einen Steuerkanal mit dem Druckraum verbunden ist und der Druckraum gegen den Steuerraum im Randbereich des Differentialkolbens abgedichtet ist, **gekennzeichnet durch** folgende Merkmale:
a) Das Gehäuse (1-4) ist als schmaler, länglicher Körper ausgebildet, wobei Ventileingang (2) und Ventilausgang (3) an den schmalen Außenseiten des Gehäuses angeordnet sind und die Ein-/Ausströmrichtung (E-A) parallel zur Gehäuselängsachse (L) verläuft;
b) der Differentialkolben (5) ist derart im Gehäuse (1-4) angeordnet, dass seine Bewegung senkrecht zur Gehäuselängsachse (L) verläuft;
c) das Pilotventil (13) ist an der schmalen Außenseite (1.3) des Gehäuses demontierbar befestigt, an welcher sich der Ventilausgang (3) befindet;
d) die Entlastungsbohrung befindet sich als vom Verschlussorgan (13.5) verschließbarer Pilotventilsitz (13.6) zwischen der Ventilkammer (13.7) des Pilotventils (13) und einem mit dem Ventilausgang (3) verbundenen Abflusskanal (14), wobei die Ventilkammer (13.7) über einen Entlastungskanal (12) mit dem Steuerraum (9) verbunden ist.

2. Ventil nach Anspruch 1, **dadurch gekennzeichnet, dass** das Gehäuse zweiteilig aufgebaut ist mit einem den Ventileingang (2) und den Ventilausgang (3) tragenden Grundkörper (1), der an einer Seite eine Öffnung besitzt, die mit einem sich in Gehäuselängsrichtung über einen Teil der Gehäuselänge erstreckenden Gehäusedeckel (4) verschlossen ist.

3. Ventil nach Anspruch 2, **dadurch gekennzeichnet, dass** der Differentialkolben (5) sowie eine den Steuerraum (9) begrenzende Haube (11) Teil eines durch die Öffnung in den Gehäuseinnenraum einsetzbaren Einsatzteils sind.

4. Ventil nach einem der Ansprüche 1 bis 3, **dadurch gekennzeichnet, dass** das Gehäuse (1-4) als Zylinder mit im wesentlichen planen schmalen Endflächen an der Außenseite aufgebaut ist.

5. Ventil nach einem der Ansprüche 1 bis 4, **dadurch gekennzeichnet, dass** Ventileingang (2) und/oder Ventilausgang (3) mit Rohr- oder Schlauchanschlüssen (16, 16', 18) versehen sind.

6. Ventil nach einem der Ansprüche 1 bis 5, **dadurch gekennzeichnet, dass** die den Ventileingang (2) tragende schmale Außenseite (1.2) des Gehäuses einen vom Ventileingang (2) durchsetzten Gewindestutzen (1.4) zum Einschrauben in eine Ventilaufnahme aufweist.
